# EUROPEAN PATENT APPLICATION

(11) **EP 4 632 580 A1**
(43) Date of publication of application: **15.10.2025**
(21) Application number: 24774091.3
(22) Date of filing: 19.03.2024
(51) Int. Cl.: G06F 11/14, G06F 16/174

(54) **BACKUP METHOD AND DEVICE**

(30) Priority: 21.03.2023 CN 202310315072
(71) Applicant: Huawei Technologies Co., Ltd., Shenzhen, Guangdong 518129 (CN)
(72) Inventor: ZHANG, Yuchuan, Shenzhen, Guangdong 518129 (CN)
(74) Representative: Isarpatent
(86) International application number: PCT/CN2024/082322
(87) International publication number: WO 2024/193526

(57) **Abstract**

This application provides a backup method and an apparatus. The method includes: determining a first application that needs data backup; packaging and compressing a file whose size is less than a first threshold in a user space corresponding to the first application, to obtain a first compressed package, where the first compressed package is stored in the user space corresponding to the first application; and backing up the first compressed package from the user space corresponding to the first application to a user space corresponding to a second application. The method can reduce overheads caused by an I/O operation generated by backing up a large quantity of small-sized files between two user spaces, reduce a backup delay, and improve user experience.

## Description

### TECHNICAL FIELD

This application pertains to the field of electronic device technologies, and in particular, to a backup method and apparatus.

### BACKGROUND

As types and use scenarios of mobile applications are enriched, more data is stored in a terminal, and the data is increasingly important. For example, dozens of applications or hundreds of applications are usually installed in a mobile phone of a user, and pictures of dozens of G or hundreds of G may be stored in an album. As a solution, backing up data in a terminal to a cloud is an effective method for reducing occupation of a limited storage space of the terminal by the data. For another example, the user wants to back up some key data of an application A in the mobile phone to an application B, to avoid a data loss after the application A is uninstalled. The foregoing processes involve backup. Therefore, how to effectively improve a backup speed is crucial to improving user experience.

### SUMMARY

In view of this, embodiments of this application provide a backup method and an apparatus. A file whose size is less than a first threshold in a user space corresponding to a first application is first packaged and compressed into a first compressed package, and then the first compressed package is backed up to a user space corresponding to a second application, to reduce overheads caused by an I/O operation generated by backing up a large quantity of small-sized files between two user spaces, reduce a backup delay, and improve user experience.

A first aspect of embodiments of this application provides a backup method, which may be applied to a terminal. The method may include: determining a first application that needs data backup; packaging and compressing a file whose size is less than a first threshold in a user space corresponding to the first application, to obtain a first compressed package, where the first compressed package is stored in the user space corresponding to the first application; and backing up the first compressed package from the user space corresponding to the first application to a user space corresponding to a second application. For example, the first application may be an application that needs data backup, and the second application may be a "backup app" in embodiments of this application, and may be an application that assists in backing up data of the application that needs data backup to a cloud server.

According to the first aspect, in a first possible implementation of the first aspect, before the packaging and compressing the file whose size is less than the first threshold in the user space corresponding to the first application, the method further includes: scanning a file in the user space corresponding to the first application. For example, the scanning step may be performed by a kernel process.

According to either of the first aspect and the foregoing possible implementation of the first aspect, in a second possible implementation of the first aspect, the method further includes: generating a first brief file, where the first brief file is used to record information about a file that needs to be backed up in the user space corresponding to the first application. For example, the step of generating a first brief file may be performed by the kernel process.

According to the second possible implementation of the first aspect, in a third possible implementation of the first aspect, the file that needs to be backed up in the user space corresponding to the first application includes: a file whose hash value changes in the user space corresponding to the first application, and/or a file newly added in the user space corresponding to the first application. It may be understood that a file system of the terminal may record metadata corresponding to each file, where the metadata may include a hash value of the file, and different files correspond to different hash values. If the hash value of the file changes, it indicates that the file is modified.

According to the second possible implementation of the first aspect, in a fourth possible implementation of the first aspect, the information about the file that needs to be backed up in the user space corresponding to the first application includes: a file name and a size of the file that needs to be backed up in the user space corresponding to the first application. In other words, the first brief file may record the file name and the size of the file that needs to be backed up in the user space corresponding to the first application, so that the terminal determines, based on the first brief file, the file that needs to be packaged and compressed into the first compressed package.

According to the second to the fourth possible implementations of the first aspect, in a fifth possible implementation of the first aspect, the method further includes: generating a second brief file based on the first brief file, where the second brief file is used to record information about a file whose size is less than the first threshold in the file recorded in the first brief file. For example, the step of generating a second brief file may be performed by the second application. The second application may be configured by a developer to determine, based on the first threshold, the file whose size is less than the first threshold in the files recorded in the first brief file, and record the information about the file into the second brief file.

According to the fifth possible implementation of the first aspect, in a sixth possible implementation of the first aspect, the step of packaging and compressing the file whose size is less than the first threshold in the user space corresponding to the first application, to obtain the first compressed package specifically includes: packaging and compressing, based on the second brief file, the file that is recorded in the second brief file in the user space corresponding to the first application, to obtain the first compressed package. In a possible implementation, the second application may send the second brief file to the kernel process, so that the kernel process packages and compresses, based on the second brief file, the file that is recorded in the second brief file in the user space corresponding to the first application, that is, the file whose size is less than the first threshold, to obtain the first compressed package.

According to any one of the first aspect and the foregoing possible implementations of the first aspect, in a seventh possible implementation of the first aspect, after the backing up the first compressed package from the user space corresponding to the first application to the user space corresponding to the second application, the method further includes: deleting the first compressed package in the user space corresponding to the first application. This reduces occupation of a storage space of the terminal by a compressed package generated in a backup process.

According to any one of the first aspect and the foregoing possible implementations of the first aspect, in an eighth possible implementation of the first aspect, the method further includes: sending the first compressed package in the user space corresponding to the second application to a cloud server. In other words, the terminal may synchronize, to the cloud server, the first compressed package that has been backed up to the user space corresponding to the second application, to complete a cloud backup process. Subsequently, a user may uninstall the first application from the terminal without worrying about a data loss of the first application.

According to any one of the first aspect and the foregoing possible implementations of the first aspect, in a ninth possible implementation of the first aspect, the method further includes: deleting the first compressed package in the user space corresponding to the second application. The step may be performed after the first compressed package in the user space corresponding to the second application has been sent to the cloud server. In other words, after completing the cloud backup process, the terminal may delete the first compressed package backed up to the user space corresponding to the second application, to reduce occupation of the storage space of the terminal by the compressed package generated in the backup process.

According to the ninth possible implementation of the first aspect, in a tenth possible implementation of the first aspect, in the process of sending the first compressed package in the user space corresponding to the second application to the cloud server, the method further includes: displaying a first interface of the second application, where the first interface includes prompt information used to prompt that data is being synchronized to the cloud server. In this way, the user learns of a specific current phase of the cloud backup process.

According to any one of the first aspect and the foregoing possible implementations of the first aspect, in an eleventh possible implementation of the first aspect, the step of packaging and compressing the file whose size is less than the first threshold in the user space corresponding to the first application, to obtain the first compressed package and the step of backing up the first compressed package from the user space corresponding to the first application to the user space corresponding to the second application are performed by the kernel process. For example, the kernel process may be an installd process, or may be another process that has permission to back up data from one user space to another user space. The kernel process may be a native kernel process of an operating system, or may be a kernel process developed by the developer confidently.

According to any one of the first aspect and the foregoing possible implementations of the first aspect, in a twelfth possible implementation of the first aspect, the method further includes: displaying a second interface of the second application, where the second interface includes a start backup control; and in response to an operation performed on the start backup control, performing, by the terminal, the step of packaging and compressing a file whose size is less than a first threshold in user space corresponding to the first application, to obtain a first compressed package.

According to any one of the first aspect and the foregoing possible implementations of the first aspect, in a thirteenth possible implementation of the first aspect, in the process of packaging and compressing the file whose size is less than the first threshold in the user space corresponding to the first application, to obtain the first compressed package, the method further includes: displaying a third interface of the second application, where the third interface includes prompt information used to prompt that data is being prepared, and/or prompt information used to prompt the user not to use the first application. In this way, the user learns of a specific current phase of the cloud backup process, to avoid affecting smooth execution of the backup process because the user uses the first application.

According to any one of the first aspect and the foregoing possible implementations of the first aspect, in a fourteenth possible implementation of the first aspect, the method further includes: sequentially backing up, to the user space corresponding to the second application, files whose sizes are greater than or equal to the first threshold in the user space corresponding to the first application. In other words, for a large-sized file, in the backup method provided in this embodiment of this application, the step of packaging and compression may not be performed, and these large-sized files are directly sequentially backed up to the user space corresponding to the second application. In this way, a balance between overheads generated by an I/O operation and overheads generated by a packaging and compression operation is achieved.

A second aspect of embodiments of this application provides an electronic device. The electronic device includes a processor and a memory, the memory stores instructions, and when the instructions are executed by the processor, the electronic device is enabled to perform the method provided in any one of the first aspect and the foregoing possible implementations of the first aspect.

A third aspect of embodiments of this application provides a computer-readable storage medium. The computer-readable storage medium stores instructions, and when the instructions are executed, an electronic device on which the computer-readable storage medium is installed is enabled to perform the method provided in any one of the first aspect and the possible implementations of the first aspect.

A fourth aspect of embodiments of this application provides a computer program product. The computer program product includes instructions, and when the instructions are executed, an electronic device on which the computer program product is installed is enabled to perform the method provided in any one of the first aspect and the possible implementations of the first aspect.

### BRIEF DESCRIPTION OF DRAWINGS

FIG. 1 is a diagram of data backup according to an embodiment of this application;
FIG. 2 is a diagram of file backup between user spaces according to an embodiment of this application;
FIG. 3 is a diagram of other file backup between user spaces according to an embodiment of this application;
FIG. 4A and FIG. 4B are a flowchart of a backup method according to an embodiment of this application;
FIG. 5A to FIG. 5H are diagrams of user interfaces of a group of cloud backup processes according to an embodiment of this application;
FIG. 6 is a diagram of a first brief file and a second brief file according to an embodiment of this application;
FIG. 7 is a diagram of still other file backup between user spaces according to an embodiment of this application;
FIG. 8 is a flowchart of another backup method according to an embodiment of this application;
FIG. 9 is a diagram of a structure of a backup apparatus according to an embodiment of this application;
FIG. 10 is a diagram of a structure of an electronic device according to an embodiment of this application; and
FIG. 11 is a diagram of a software architecture of an electronic device according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, persons skilled in the art should know that this application may also be implemented in other embodiments without these specific details. In other cases, detailed descriptions of a well-known system, apparatus, circuit, and method are omitted, so as not to obscure the description of this application with unnecessary detail.

When using a terminal, a user often needs to back up data. How to improve a backup speed is crucial to improving user experience.

In this application, the following describes a backup method and an apparatus provided in embodiments of this application by using a data backup scenario in which data in a terminal needs to be backed up to a cloud as an example. However, it should be understood that this does not constitute a limitation on the backup method and the apparatus provided in embodiments of this application. The backup method and the apparatus provided in embodiments of this application may be used in any scenario in which backup needs to be performed. For example, the backup method and the apparatus may be further used in a scenario in which data of an application is backed up to another application.

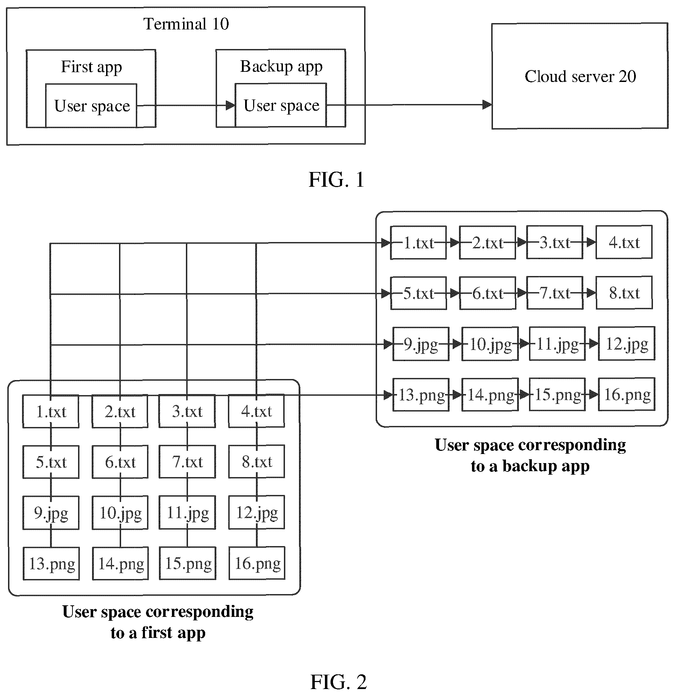

FIG. 1 is a diagram of an example in which a terminal 10 backs up data of a first application (Application, APP) to a cloud server 20. As shown in FIG. 1, the first app and a backup app are installed in the terminal 10. The first app may be an app that needs data backup, and the backup app may be an app that assists in backing up, to the cloud server 20, data of the app that needs data backup.

It may be understood that the backup app may be an app that is developed or provided by a terminal vendor and that is pre-installed in the terminal to perform a cloud backup service, or may be an app that is downloaded by a user from an application store and then installed in the terminal and that is provided by a third-party vendor to perform a cloud backup service. The former is, for example, "Cloud space" pre-installed in a Huawei terminal, and the latter is, for example, "Baidu cloud".

The cloud server 20 may be a server provided, operated, or maintained by a vendor that provides the backup app. For example, if the backup app is "Cloud space", the cloud server 20 may be a server provided, operated, or maintained by Huawei; or if the backup app is "Baidu cloud", the cloud server 20 may be a server provided, operated, or maintained by Baidu.

The first app may include an app pre-installed in the terminal 10, for example, Messaging, Calendar, Notepad, Recording, and Gallery, and may also include an app installed by the user in the terminal 10, for example, WeChat, Weibo, and Honor of Kings that are downloaded and installed by the user by using the application store.

As shown in FIG. 1, each app installed in the terminal 10 corresponds to a user space (User Space) used to store data of the app. The user space may also be referred to as a "sandbox" or a "sandbox". The user space corresponding to each app may be used to store a part or all of data associated with the app, including but not limited to data (for example, buffered data) generated in a process of using the app by the user, code segment data corresponding to the app, multimedia data obtained by using the app, and the like. Each user space may correspond to a storage area in a storage device (for example, a disk) of the terminal 10.

Each app has permission to operate the data stored in the user space corresponding to the app, but usually has no permission to directly operate data stored in a user space corresponding to another app. This mechanism helps implement data isolation and control, and improve data security.

In the scenario shown in FIG. 1, the backup app has permission to operate data stored in a user space corresponding to the backup app, but usually has no permission to directly operate data stored in a user space corresponding to the first app.

In a process of backing up the data of the first app to the cloud server 20 by using the backup app, first, the backup app needs to invoke a process with high operation permission, for example, a kernel process, and backs up, by using the process, the data in the user space corresponding to the first app to the user space corresponding to the backup app; and then, the backup app transmits, to the cloud server 20, the data that has been backed up to the user space corresponding to the backup app. In this way, the process of backing up the data of the first app installed in the terminal 10 to the cloud server 20 is completed.

In some possible implementations, the foregoing "high operation permission" may be administrator permission or root permission. The "kernel process" may be, for example, an installd process in a kernel mode, or may be another kernel process having a same priority as the installd process, including but not limited to a zygote process, a servicemanager process, a media process, a ueventd process, a healthd process, a logd process, an adbd process, an Imkd process, a console process, a vold process, a netd process, a debuggerd process, a debuggerd64 process, a ril-daemon process, a surfaceflinger process, and the like. It should be understood that a specific kernel process or specific kernel processes are not limited in embodiments of this application. Persons skilled in the art may select any one or more of the foregoing kernel processes according to an actual requirement, or may modify kernel code to develop a kernel process for data backup between different user spaces.

It may be understood that the data may exist in the terminal 10 in a form of a file. Therefore, a process of backing up the data is a process of backing up files one by one.

FIG. 2 is a diagram of an example of file backup between user spaces. As shown in FIG. 2, 16 files are stored in a user space corresponding to a first app. As described above, different user spaces correspond to different storage areas in a storage device. A read/write operation needs to be performed to back up a file from one storage area to another storage area, and an input/output (Input/Output) operation is generated, which is referred to as an "I/O operation" for short. Therefore, in the scenario shown in FIG. 2, the 16 files stored in the user space corresponding to the first app are backed up to a user space corresponding to a backup app, and at least 16 I/O operations are generated. Software and hardware resources of an operating system are limited. A large quantity of I/O operations cause huge system overheads and affect a backup speed. It should be understood that FIG. 2 is merely used as an example. In an actual backup scenario, a quantity of files that need to be backed up in one user space may be dozens or hundreds of files, and a large quantity of I/O operations generated by backup of a large quantity of files severely affect the backup speed and user experience.

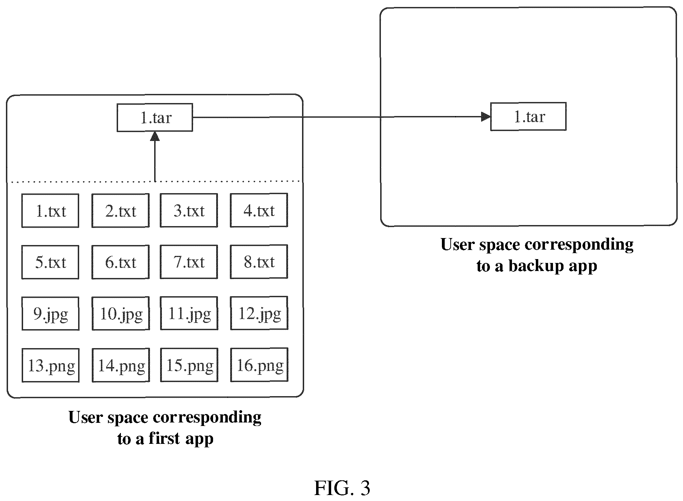

In view of this, as shown in FIG. 3, an embodiment of this application provides a backup method. First, a plurality of files in a user space corresponding to a first app that needs data backup (or file backup) are packaged and compressed into a first compressed package (for example, "1.tar" shown in FIG. 3), and then the first compressed package is backed up to a user space corresponding to a backup app. Therefore, a quantity of I/O operations can be greatly reduced, and beneficial effects of improving a backup speed and improving user experience can be achieved.

In an experiment, the inventor finds that a large quantity of I/O operations generated when a large quantity of small-sized files are backed up in the manner shown in FIG. 2 are the key to affecting the backup speed. An I/O operation generated when a large-sized file is backed up has small impact on the backup speed, but packaging and compressing the large-sized file causes high time or space overheads. Therefore, in a possible implementation, in the backup method provided in this embodiment of this application, a large file and a small file may be further first determined (for example, a file whose file size is less than a threshold is determined as a small file, or a file whose file size is greater than a threshold is determined as a large file), and only the small file is backed up in the manner shown in FIG. 3, and the large file is still backed up in the manner shown in FIG. 2. In this way, impact of I/O operations generated by backup of small files on the backup speed is specifically reduced.

The following further describes a possible specific implementation of the backup method provided in embodiments of this application with reference to the accompanying drawings.

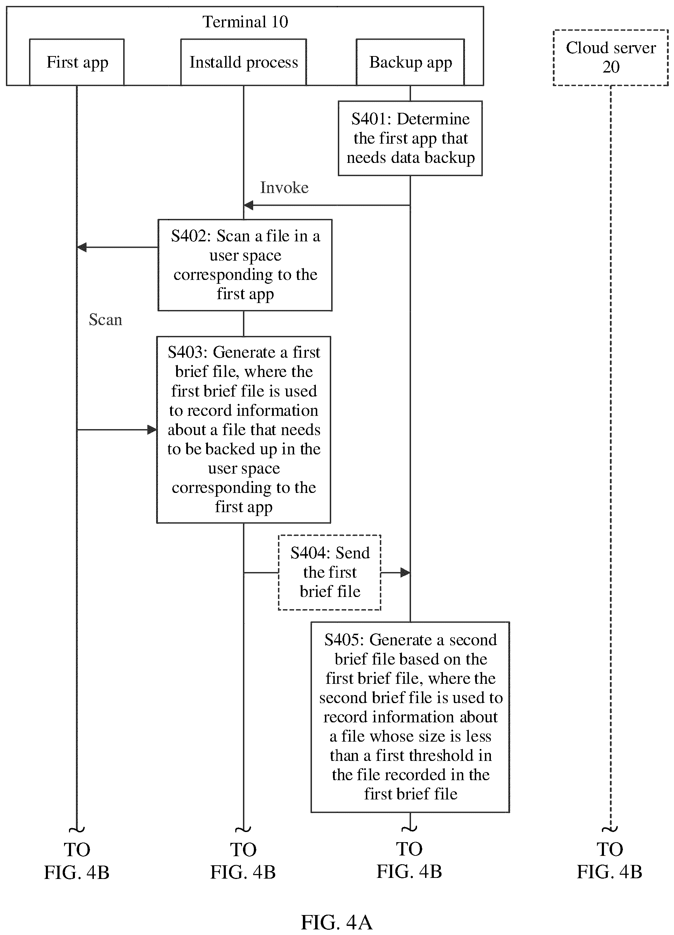

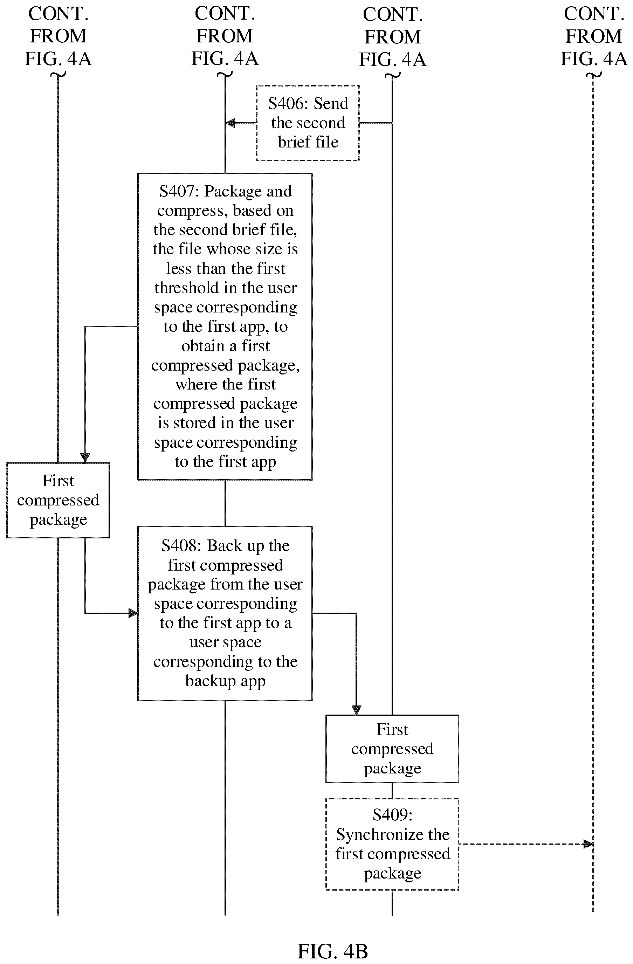

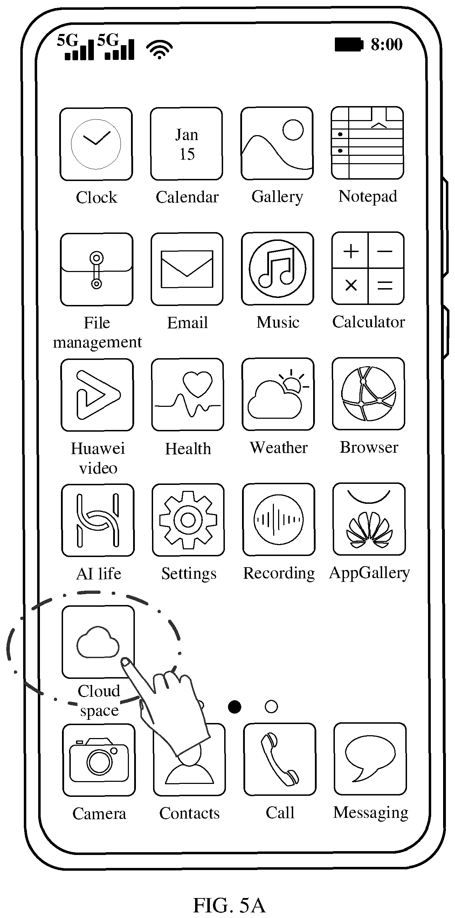

FIG. 4A and FIG. 4B are a flowchart of an example of a backup method according to an embodiment of this application. The method may include step S401 to step S409. The method shown in FIG. 4A and FIG. 4B may be applied to the scenario, shown in FIG. 1, in which the terminal 10 backs up the data of the first app to the cloud server 20, and may be understood as further details of the backup method in the scenario. Therefore, the foregoing introduction and descriptions related to FIG. 1 are also applicable to the embodiment shown in FIG. 4A and FIG. 4B, and details are not described herein again. A process of performing the method shown in FIG. 4A and FIG. 4B may occur in a process in which a Huawei mobile phone displays interfaces shown in FIG. 5A to FIG. 5H. Therefore, for ease of description, FIG. 5A to FIG. 5H are first described, and then the backup method shown in FIG. 4A and FIG. 4B is described with reference to FIG. 5A to FIG. 5H.

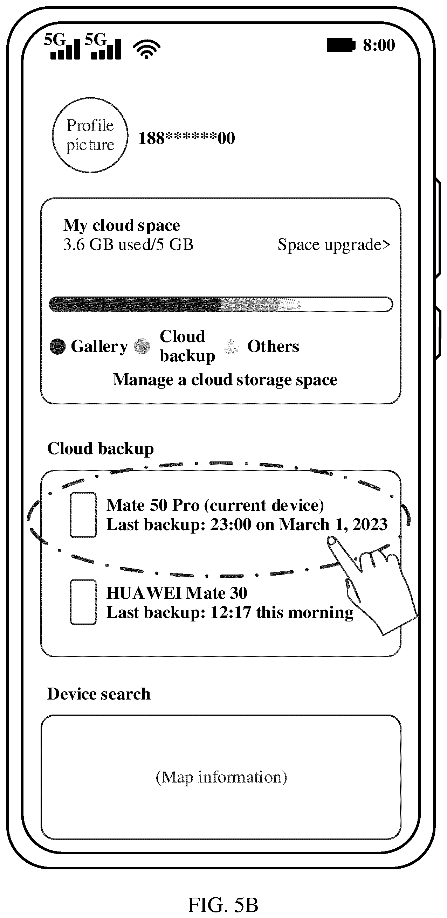

This embodiment of this application is described by using an example in which the terminal 10 is a Huawei mobile phone (for example, Mate 50 Pro) and a backup app is "Cloud space". As shown in FIG. 5A, an icon of Cloud space is displayed on a home screen of the Huawei mobile phone, and a user may tap the icon to start the app of Cloud space. In response to an operation of starting Cloud space, the Huawei mobile phone may display a home page interface of Cloud space shown in FIG. 5B. The home page interface may include information about a logged-in Huawei account of the user, such as an account name "188******00" and a profile picture. The home page interface may further include cloud space usage of the Huawei account. As shown in FIG. 5B, a cloud space has a total of 5 GB, and currently 3.6 GB is used. The home page interface may further include a data type of the used cloud space, such as a gallery, cloud backup, and others. The home page interface may further include information (such as a device name and last backup time) about a terminal device on which cloud backup can be performed and that has logged in to the Huawei account. As shown in FIG. 5B, last backup time of Mate 50 Pro (current device) is 23:00 on March 1, 2023, and last backup time of HUAWEI Mate 30 is 12:17 this morning. The home page interface may further include another function such as device search.

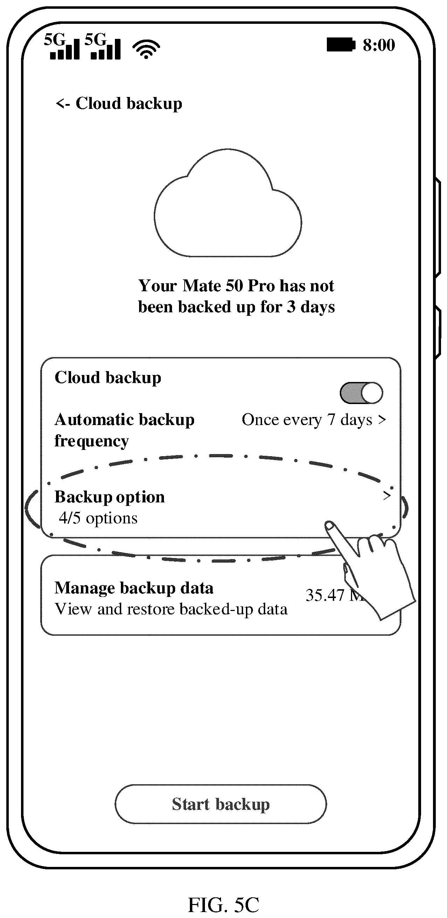

In response to an operation of tapping the terminal device "Mate 50 Pro" on which cloud backup can be performed, the Huawei mobile phone may display a cloud backup interface corresponding to "Mate 50 Pro" shown in FIG. 5C. The cloud backup interface may include prompt information, for example, "Your Mate 50 Pro has not been backed up for 3 days." The cloud backup interface may further include an operation option for enabling or disabling a cloud backup function, an option for setting an automatic backup frequency (as shown in FIG. 5C, the automatic backup frequency is set to once every 7 days), a backup option, an option for managing backup data, and the like. A total quantity of apps on which cloud backup can be performed in apps installed in Mate 50 Pro and a quantity of apps whose cloud backup functions are enabled in the apps installed in Mate 50 Pro may be further displayed under the backup option. As shown in FIG. 5C, a meaning of "4/5 options" is that there are a total of five apps on which cloud backup can be performed, where cloud backup functions of four apps are enabled, and a cloud backup function of one remaining app is not enabled (or disabled).

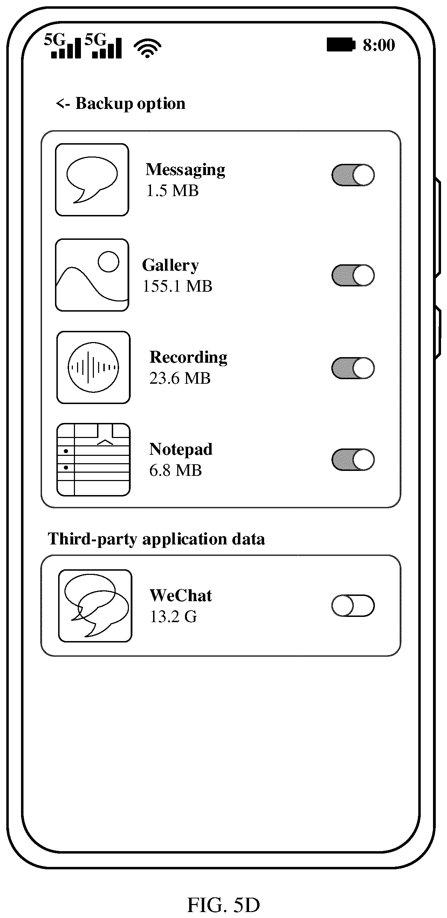

In response to an operation of tapping the backup option, the Huawei mobile phone may display a backup option interface shown in FIG. 5D. The backup option may be used to enable or disable a cloud backup function of a specific app. As shown in FIG. 5D, the cloud backup functions of four apps: Messaging, Gallery, Recording, and Notepad are enabled, and the cloud backup function of one app: WeChat, is disabled. The user may tap an enabling/disabling button to adjust a status of the cloud backup function of the app displayed in the backup option interface. The backup option interface may include information about an app on which cloud backup can be performed, for example, an indicator (such as a name or an icon) of the app, and a size (or a size value) of data that corresponds to the app and on which cloud backup can be performed. As shown in FIG. 5D, data of 1.5 MB that corresponds to "Messaging" and on which cloud backup can be performed, data of 155 MB that corresponds to "Gallery" and on which cloud backup can be performed, and so on. In a possible implementation, the backup option interface may further display, by category, an app pre-installed in the Huawei mobile phone and an app installed by the user. As shown in FIG. 5D, WeChat is displayed in a "third-party application data" category, and is distinguished from pre-installed apps such as Messaging, Gallery, Recording, and Notepad.

In a possible implementation, the backup option interface may further display an add control (not shown in FIG. 5D), and the user may tap the add control to add, to the backup interface, an app that is not displayed in the backup option interface. Correspondingly, the backup option interface may further display a delete control (not shown in FIG. 5D). The user may tap the delete control to delete, from the backup option interface, an app displayed in the backup option interface.

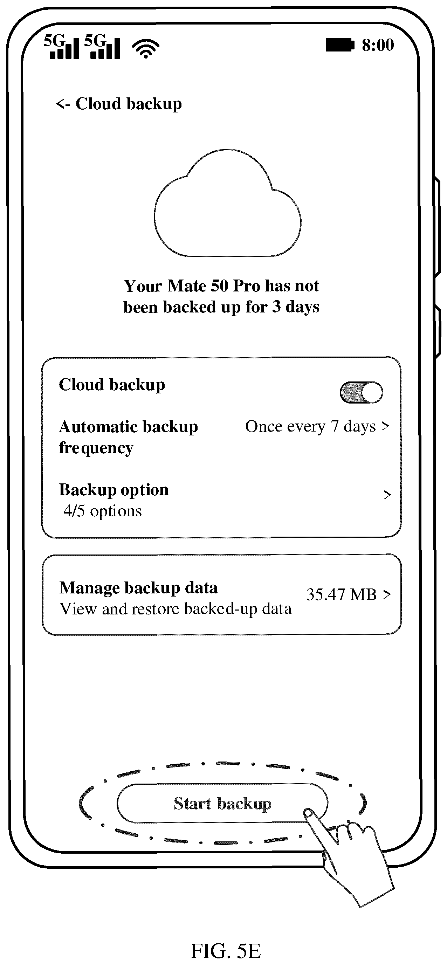

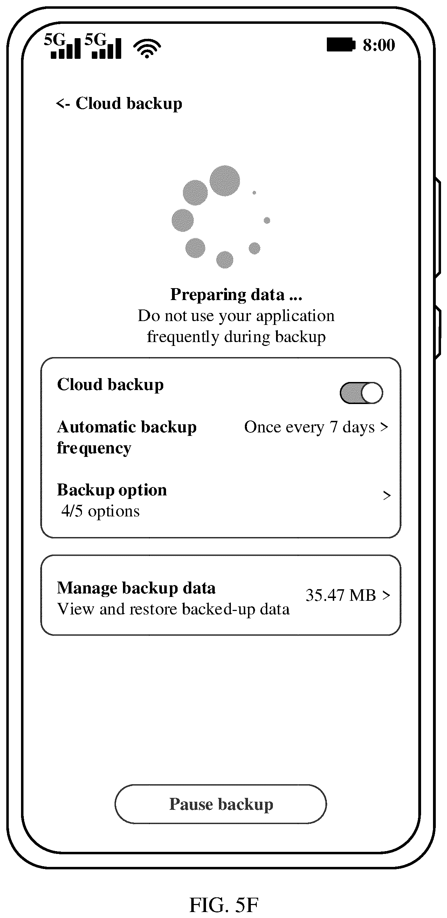

As shown in FIG. 5E, in response to an operation of tapping a "Start backup" button, the Huawei mobile phone displays an interface shown in FIG. 5F, and starts to prepare data. The interface shown in FIG. 5F may include prompt information, used to prompt the user that data is being prepared currently, and prompt the user not to frequently use an app selected by the backup option. In FIG. 5F, the "Start backup" button corresponding to FIG. 4E may be changed to a "Pause backup" button. When the Huawei mobile phone displays the interface shown in FIG. 5F, the user may pause data preparation by tapping the pause backup button.

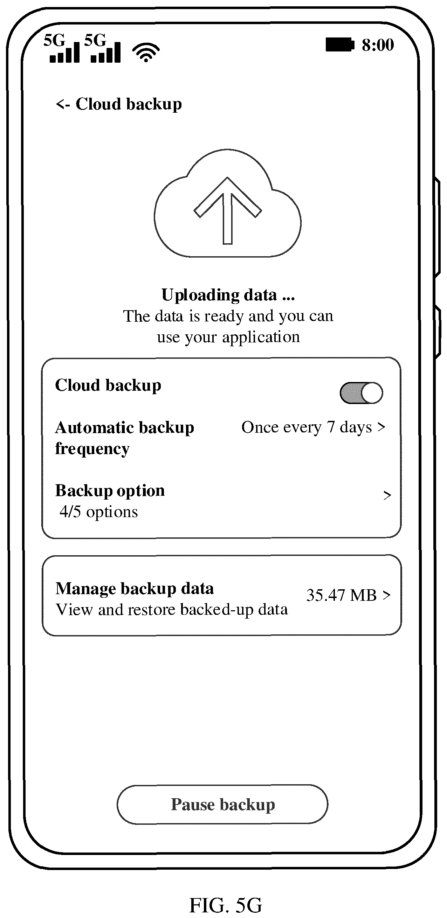

After the data preparation is completed, the Huawei mobile phone displays an interface shown in FIG. 5G and starts to upload the data. The interface shown in FIG. 5G may include prompt information, used to prompt the user that the data is ready currently and the user may use the app selected by the backup option. Similar to FIG. 4F, the interface shown in FIG. 5G may also display a "Pause backup" button, and the user may tap the pause backup button to pause data uploading.

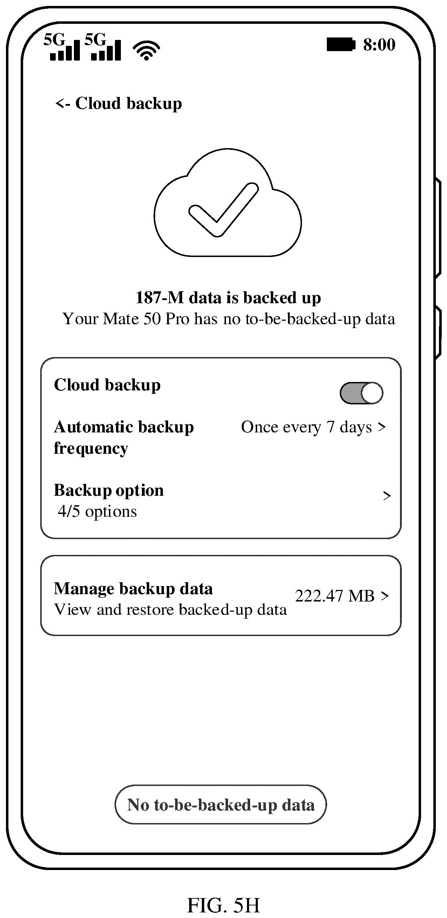

After the data is uploaded, that is, after a process of backing up the data from the Huawei mobile phone locally to the cloud server is completed, the Huawei mobile phone may display an interface shown in FIG. 5H. One process manually triggered by the user to back up the local data of Mate 50 Pro to the cloud server is completed. The interface shown in FIG. 5H may include prompt information, used to prompt the user that data backup is completed, and may further display prompt information used to notify the user that there is no to-be-backed-up data currently.

In the process in which the Huawei mobile phone displays the interfaces shown in FIG. 5A to FIG. 5H, in a possible implementation, step S401 to step S408 in the embodiment of FIG. 4A and FIG. 4B may occur in a process from time after the user taps the "Start backup" button shown in FIG. 5E to time before the data upload interface shown in FIG. 5G is displayed. Step S409 in the embodiment of FIG. 4A and FIG. 4B may occur in a process of displaying the data uploading interface shown in FIG. 5G.

S401: The backup app determines the first app that needs data backup.

As described above, the first app is an app that needs data backup, and the backup app is an app that assists in backing up, to the cloud server 20, data of the app that needs data backup.

For example, the terminal 10 is a Huawei mobile phone, and the backup app is "Cloud space". The user may manually enable or disable, in the interface shown in FIG. 5D, a cloud backup function of an app on which cloud backup can be performed; and the user may manually add or delete, in the interface shown in FIG. 5D, an app (not shown in FIG. 5D) on which cloud backup can be performed.

In a possible implementation, when the user taps the "Start backup" button shown in FIG. 5E, Cloud space determines an app whose cloud backup function is in an enabled state at this time as the first app that needs data backup. With reference to the examples in FIG. 5A to FIG. 5H, when the user taps the "Start backup" button shown in FIG. 5E, the cloud backup functions of the four apps: Messaging, Gallery, Recording, and Notepad are in the enabled state. Therefore, in this example, the first app includes the four apps: Messaging, Gallery, Recording, and Notepad.

S402: The backup app invokes an installd process, and triggers the installd process to scan a file in a user space corresponding to the first app.

In a possible implementation, after the first app that needs data backup is determined in step S401, the backup app may notify the installd process of information about the first app, so that the installd process scans, based on the information about the first app, the file in the user space corresponding to the first app. With reference to the examples in FIG. 5A to FIG. 5H, the information about the first app may include names or indicators of the four apps: Messaging, Gallery, Recording, and Notepad, so that the installd process scans files in user spaces respectively corresponding to the four apps: Messaging, Gallery, Recording, and Notepad.

A scanning process may be understood as a process in which the installd process determines a file that actually needs to be backed up in the user space corresponding to the first app. It may be understood that a file system of the terminal 10 stores metadata information corresponding to each file, where the metadata information may include a hash value of the file. The installd process may determine, based on the hash value of each file, whether the file is modified compared with last scanning or whether the file is a file newly added after last scanning. The installd process may determine a file whose hash value changes and a newly added file as files that actually need to be backed up. For a file whose hash value does not change compared with the last scanning, the installd process may consider that backup is not needed.

S403: The installd process generates a first brief file, where the first brief file is used to record information about a file that needs to be backed up in the user space corresponding to the first app.

In a possible implementation, the installd process scans the user space corresponding to the first app, determines files (for example, the file whose hash value changes and the newly added file compared with the last scanning) that actually need to be backed up, and records information about the files that actually need to be backed up into the first brief file. The first brief file may be stored in a memory of the terminal 10.

For example, the first brief file may be a text file in a ".txt" format, where the first brief file records file names of the files that actually need to be backed up and that are determined after the installd process scans the user space of the first app, and may further record sizes (or size values) respectively corresponding to the files that actually need to be backed up. It may be understood that if there are a plurality of first apps, the installd process may generate one first brief file for each app in the first apps.

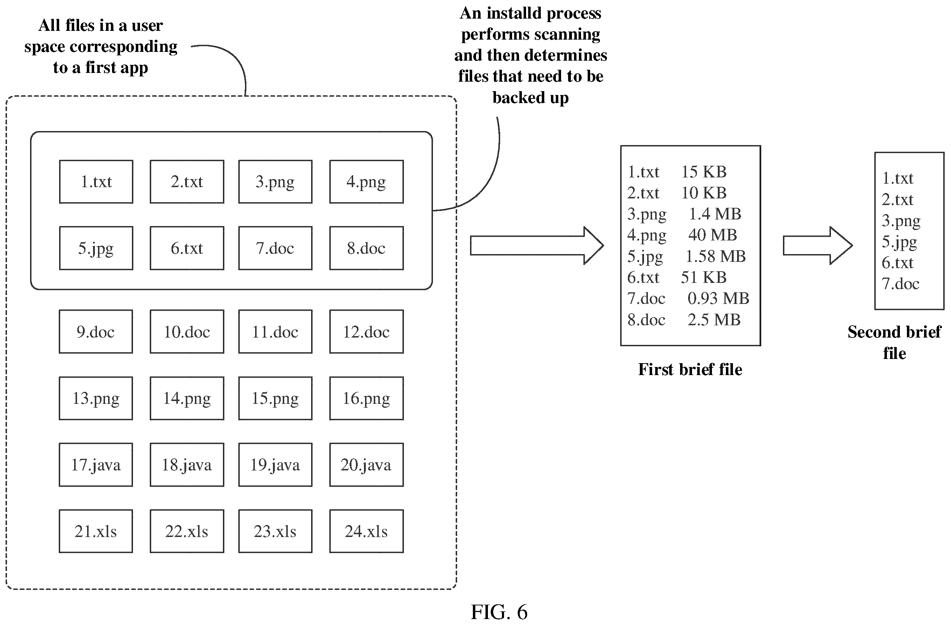

In an example of FIG. 6, a diagram of an example of the first brief file is shown. As shown in FIG. 6, the user space corresponding to the first app includes 24 files, and the installd process performs scanning and then determines that "1.txt", "2.txt", "3.png", "4.png", "5.jpg", "6.txt", "7.doc", and "8.doc" are files that need to be backed up. In this case, the installd process may generate the first brief file shown in FIG. 6, and the first brief file records file name information and file size information of the eight files.

S404: The installd process sends the first brief file to the backup app.

In some possible implementations, the installd process may send, to the backup app, the first brief file generated in step S403, so that the backup app may learn, by using the first brief file, of information about the files that need to be backed up this time in the user space corresponding to the first app.

In some other possible implementations, step S404 may not be performed. Instead, the installd process may send, to the backup app, an address at which the first brief file is stored, so that the backup app reads the first brief file from the address, to learn of information about the files that need to be backed up this time in the user space corresponding to the first app. For example, the installd process may send a pointer pointing to the first brief file to the backup app.

S405: The backup app generates a second brief file based on the first brief file, where the second brief file is used to record information about a file whose size is less than a first threshold in the file recorded in the first brief file.

In a possible implementation, a developer of the backup app configures a preset policy into the backup app, so that the backup app generates the second brief file based on the preset policy and the first brief file. For example, the preset policy may include recording the information about the file whose size is less than the first threshold into the second brief file. The second brief file may be stored in the memory of the terminal 10.

For example, the second brief file may be a text file in a ".txt" format, where the second brief file is used to record the information about the file whose size is less than the first threshold in the file recorded in the first brief file. It may be understood that, if there are the plurality of first apps, the backup app may generate one second brief file for each app in the first apps.

In an example of FIG. 6, a diagram of an example of the second brief file is shown. As shown in FIG. 6, the first brief file records the file name information and the file size information of the eight files. Assuming that the first threshold is 2 MB, the backup app records information about a file whose file size is less than 2 MB into the second brief file. As shown in FIG. 6, sizes (or size values) of "1.txt", "2.txt", "3.png", "5.jpg", "6.txt", and "7.doc" are less than 2 MB, and sizes of "4.png" and "8.doc" are greater than 2 MB. Therefore, the second brief file generated by the backup app includes information about the six files: "1.txt", "2.txt", "3.png", "5.jpg", "6.txt", and "7.doc", and does not include information about the two files: "4.png" and "8.doc". As shown in FIG. 6, the information about the file in the second brief file may include only file name information, to reduce a size of the second brief file. Certainly, the second brief file may also include both the file name information and file size information (not shown in FIG. 6).

S406: The backup app sends the second brief file to the installd process.

In some possible implementations, the backup app may send the second brief file generated in step S405 to the installd process, so that the installd process may learn, by using the second brief file, of specific files, in the user space corresponding to the first app, that need to be first packaged and compressed and then backed up to a user space corresponding to the backup app.

In some other possible implementations, step S405 may not be performed. Instead, the backup app may send, to the installd process, an address at which the second brief file is stored, so that the installd process reads the second brief file from the address, to learn of specific files, in the user space corresponding to the first app, that need to be first packaged and compressed and then backed up to a user space corresponding to the backup app. For example, the backup app may send a pointer pointing to the second brief file to the installd process.

S407: The installd process packages and compresses, based on the second brief file, the file whose size is less than the first threshold in the user space corresponding to the first app, to obtain a first compressed package, where the first compressed package is stored in the user space corresponding to the first app.

Specifically, the installd process packages and compresses, based on the information recorded in the second brief file, the file (that is, the file whose size is less than the first threshold) that is recorded in the second brief file in the user space corresponding to the first app, to obtain the first compressed package, and stores the first compressed package in the user space corresponding to the first app.

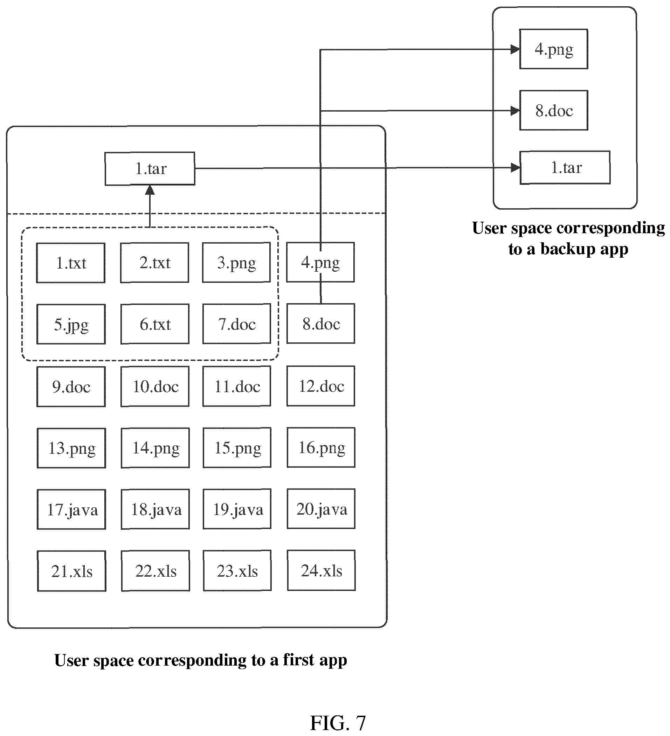

For example, as shown in FIG. 7, with reference to the example in FIG. 6, assuming that the second brief file is shown in FIG. 6, the installd process packages and compresses, based on that the information about the six files: "1.txt", "2.txt", "3.png", "5.jpg", "6.txt", and "7.doc" is recorded in the second brief file, the six files: "1.txt", "2.txt", "3.png", "5.jpg", "6.txt", and "7.doc" in the user space corresponding to the first app into one first compressed package "1.tar". The installd process does not package and compress the two files: "4.png" and "8.doc" that are recorded in the first brief file but not recorded in the second brief file.

It may be understood that "1.tar" in FIG. 7 is merely used as an example of the first compressed file. The first compressed file in the backup method provided in this embodiment of this application may alternatively be a compressed file in another file format, for example, ".zip".

Optionally, after the installd process packages and compresses, based on the second brief file, the file whose size is less than the first threshold in the user space corresponding to the first app, to obtain the first compressed package, the terminal 10 may perform an operation of deleting the second brief file. In this way, the second brief file generated in the backup process does not occupy storage space of the terminal 10. Specifically, the deletion operation may be performed by the installd process, or may be performed by the backup app after the installd process notifies the backup app. This is not limited in this application.

S408: The installd process backs up the first compressed package from the user space corresponding to the first app to the user space corresponding to the backup app.

In a possible implementation, after the installd process obtains the first compressed package, step S408 may be performed to back up the first compressed package from the user space corresponding to the first app to the user space corresponding to the backup app.

As described above, in the implementation shown in FIG. 2, if files in the user space corresponding to the first app are not packaged and compressed, the installd process needs to perform I/O operations for a quantity of times the same as a quantity of files that need to be backed up, and a large quantity of system overheads are generated. If there are a large quantity of small files with a small size in the user space corresponding to the first app, overheads generated by the I/O operations cannot be ignored compared with overheads generated by a backup operation. This greatly affects a file backup speed. In view of this, in the backup method provided in this embodiment of this application, for the large quantity of small-sized files, the files are first packaged and compressed into one compressed package in the user space corresponding to the first app, and then the compressed package is backed up from the user space corresponding to the first app to the user space corresponding to the backup app. This can greatly reduce overheads of I/O operations generated when small files are sequentially backed up one by one between user spaces, to greatly increase the file backup speed and improve user experience.

Optionally, after step S408 is performed, an operation of deleting the first compressed package in the user space corresponding to the first app may be performed, to reduce occupation of the storage space of the terminal 10 by the first compressed package generated in the backup process. In some possible implementations, the operation of deleting the first compressed package in the user space corresponding to the first app may be performed by the installd process. In some other possible implementations, the operation of deleting the first compressed package in the user space corresponding to the first app may alternatively be performed by the first app or performed by the first app triggered by the installd process.

In some possible implementations, there may be a file whose file information is included in the first brief file but is not included in the second brief file, that is, a file whose size is greater than the first threshold exists in the files that need to be backed up this time. For such a file, the manner shown in FIG. 2 may still be used. The installd process sequentially backs up each file whose size is greater than the first threshold from the user space corresponding to the first app to the user space corresponding to the backup app. It may be understood that, for ease of description, the process is not shown in FIG. 4A and FIG. 4B.

In the example in FIG. 7, because sizes of the two files: "4.png" and "8.doc" are greater than the first threshold, that is, 2 MB, for the two files: "4.png" and "8.doc", the installd process may still sequentially back up, in the manner shown in FIG. 2, the two files: "4.png" and "8.doc" from the user space corresponding to the first app to the user space corresponding to the backup app.

It may be understood that, when a large-sized file is backed up between user spaces, overheads generated by an I/O operation are relatively small, but high overheads are generated when a packaging and compression operation is performed on the large-sized file. Therefore, according to the backup method provided in this embodiment of this application, only the small-sized file may be backed up between the user spaces in the manner shown in FIG. 3, and the large-sized file is still backed up between the user spaces in the manner shown in FIG. 2. In this way, a balance between overheads generated by I/O operations and overheads generated by packaging and compression is achieved, to maximize benefits. When actually applying the method provided in this embodiment of this application, persons skilled in the art may obtain an optimal first threshold for software and hardware products with different performance by using experimental tests. The foregoing only uses 2 MB as an example of the first threshold.

Optionally, after the installd process backs up, to the user space corresponding to the backup app, these files whose sizes are greater than the first threshold in the user space corresponding to the first app, the terminal 10 may perform an operation of deleting the first brief file. In this way, the first brief file generated in the backup process does not occupy the storage space of the terminal 10. Specifically, the deletion operation may be performed by the installd process, or may be performed by the first app after the installd process notifies the first app. This is not limited in this application.

In some possible implementations, for example, the terminal 10 is a Huawei mobile phone and the backup app is "Cloud space". In this case, the Huawei mobile phone may start to perform step S401 to step S408 in response to tapping, by the user, the "Start backup" button shown in FIG. 5E. In addition, in response to tapping the "Start backup" button shown in FIG. 5E, the Huawei mobile phone may display the interface shown in FIG. 5F. In a process of performing step S401 to step S408, the Huawei mobile phone prepares to-be-backed-up data. Therefore, the interface shown in FIG. 5F may be displayed to prompt the user that the data is being prepared currently, and prompt the user not to frequently use the application that is selected by the backup option and that needs cloud backup. After step S408 is performed, that is, data preparation is completed, and the first compressed package is backed up from the user space corresponding to the first app to a user space corresponding to Cloud space, the Huawei mobile phone may display the interface shown in FIG. 5G, that is, the Huawei mobile phone starts to perform step S409.

It may be understood that, for ease of description, although a process of backing up the file whose size is greater than the first threshold from the user space corresponding to the first app to the user space corresponding to the backup app is not shown in the embodiment of FIG. 4A and FIG. 4B, it does not mean that this step is not performed. Before step S409 is performed, it may be understood that the installd process has also completed the process of backing up the file (if present) whose size is greater than the first threshold from the user space corresponding to the first app to the user space corresponding to the backup app.

S409: The backup app synchronizes the first compressed package to the cloud server 20.

The terminal 10 has a function of communicating with the cloud server 20, for example, communicating with the cloud server 20 through a cellular communication network or a Wi-Fi network accessed by the terminal 10. The terminal 10 synchronizes the first compressed package to the cloud server 20 through a network.

It may be understood that step S409 is a necessary step in a scenario in which the data of the first app is synchronized to the cloud server 20. In a scenario in which the data of the first app is backed up to another app to prevent the data of the first app from being lost after the first app is deleted (the cloud server 20 may not be disposed), step S409 may not be performed.

After the backup app synchronizes the first compressed package to the cloud server 20, the terminal 10 may perform an operation of deleting the first compressed package in the user space corresponding to the backup app. In some possible implementations, the operation of deleting the first compressed package in the user space corresponding to the backup app may be performed by the backup app. In other possible implementations, the operation of deleting the first compressed package in the user space corresponding to the backup app may be performed by the installd process or performed by the backup app triggered by the installd process. This reduces occupation of the storage space of the terminal 10 by the first compressed package generated in the backup process.

It may be understood that, for ease of description, although a process of synchronizing the file whose size is greater than the first threshold from the user space corresponding to the backup app to the cloud server 20 is not shown in the embodiment in FIG. 4A and FIG. 4B, it does not mean that this step is not performed. In a process of performing step S409, it may be understood that the backup app has also completed the process of synchronizing the file (if present) whose size is greater than the first threshold from the user space corresponding to the backup app to the cloud server 20.

Correspondingly, after the process of synchronizing the file (if present) whose size is greater than the first threshold from the user space corresponding to the backup app to the cloud server 20 is completed, the terminal 10 may also perform an operation of deleting the file whose size is greater than the first threshold in the user space corresponding to the backup app. The deletion operation may be performed by the backup app, or may be performed by the installd process, or may be performed by the backup app triggered by the installd process. This reduces occupation of the storage space of the terminal 10 by the backup file generated in the backup process.

Optionally, after obtaining the first compressed package sent by the terminal 10, the cloud server 20 may perform a decompression operation on the first compressed package to obtain the file in the first compressed package.

In some other possible implementations, after obtaining the first compressed package, the backup app may first decompress the first compressed package and then synchronize data in the first compressed package to the cloud server 20.

It should be understood that, in the embodiment in FIG. 4A and FIG. 4B, an example in which the installd process is only used as a possible implementation is used for description, and this does not constitute a limitation on the backup method provided in this embodiment of this application. The installd process may be replaced with another process that may implement the foregoing function, and is replaced with a process that has high permission such as performing a read/write operation on a file in a user space, for example, a kernel process. Specifically, the installd process may be replaced with a kernel process having a same priority as the installd process. This example is described above, and details are not described herein again.

In some other possible implementations, persons skilled in the art may not use an existing kernel process of an operating system, or rewrite an existing kernel process of an operating system to perform the backup method provided in this embodiment of this application, but develop a new kernel process to perform the backup method provided in this embodiment of this application. Regardless of the implementation, a process that can perform a same function as the installd process in the backup method provided in this embodiment of this application may be understood as an equivalent replacement of the installd process.

It should be understood that, in the embodiment in FIG. 4A and FIG. 4B, the first brief file and the second brief file are used as media for transferring, between the installd process and the backup app, the information about the file in the user space corresponding to the first app. However, this does not constitute a limitation on the backup method provided in this embodiment of this application. During actual application, persons skilled in the art may also use another manner to implement interaction between the installd process and the backup app on the information about the file in the user space corresponding to the first app. For example, the installd process may alternatively store, in a list variable, information about a file that needs to be backed up this time in the user space corresponding to the first app and that is obtained through scanning, and transfer the information to the backup app; or the backup app may store, in another list variable, information about a determined file that needs to be packaged and compressed into the first compressed package in the user space corresponding to the first app, and transfer the information to the installd process.

In other words, in the embodiment in FIG. 4A and FIG. 4B, the first brief file may be replaced with an implementation such as a "first information medium", and the second brief file may be replaced with an implementation such as a "second information medium", without changing the technical essence of the backup method provided in this embodiment of this application.

The inventor designs an experiment to store 2000 small files whose sizes are 1 MB in the user space corresponding to the first app. In a same network connection state, if the backup method provided in this embodiment of this application is not applied, it takes 162 seconds to complete the cloud backup process shown in FIG. 5E to FIG. 5H. If the backup method provided in this embodiment of this application is applied, it takes only 32 seconds to complete the cloud backup process shown in FIG. 5E to FIG. 5H. It can be learned that, according to the method provided in this embodiment of this application, the file in the user space corresponding to the first app is first packaged and compressed to obtain the first compressed package, and then the first compressed package is backed up from the user space corresponding to the first app to the user space corresponding to the backup app, to achieve a beneficial technical effect of greatly reducing backup duration.

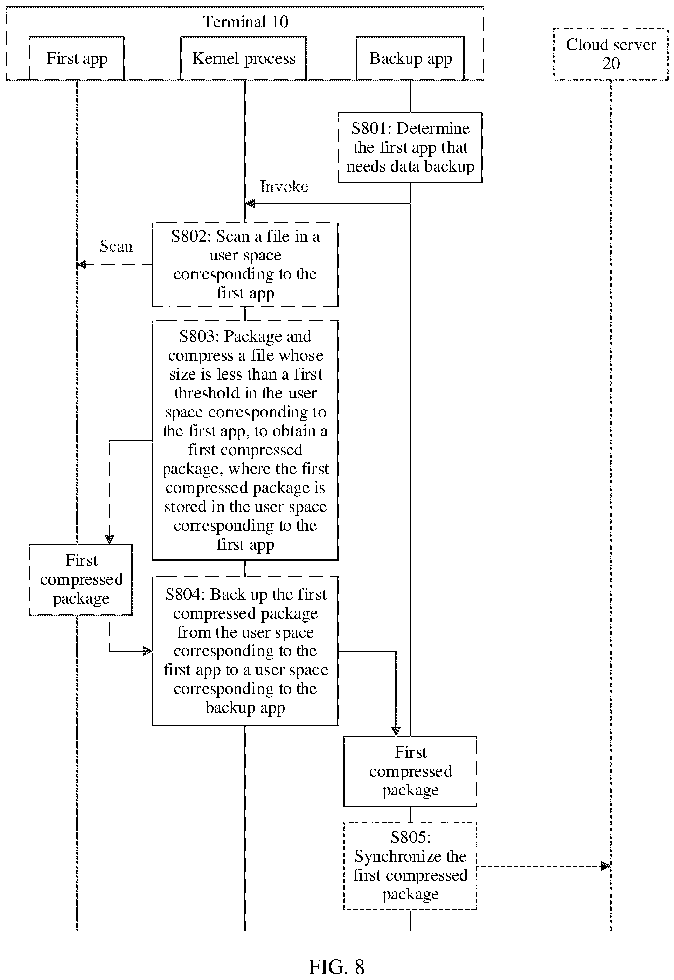

FIG. 8 is a flowchart of an example of a backup method according to an embodiment of this application. The method may include step S801 to step S805. The method shown in FIG. 8 may be applied to the scenario, shown in FIG. 1, in which the terminal 10 backs up the data of the first app to the cloud server 20, and may be understood as further details of the backup method in the scenario. Therefore, the foregoing introduction and descriptions related to FIG. 1 are also applicable to the embodiment shown in FIG. 8, and details are not described herein again. A process of performing the method shown in FIG. 8 may occur in a process in which a Huawei mobile phone displays the interfaces shown in FIG. 5A to FIG. 5H. FIG. 5A to FIG. 5H have been described above, and details are not described herein again.

A difference between the backup method shown in FIG. 8 and the backup method shown in FIG. 4A and FIG. 4B lies in that, in FIG. 8, some steps (for example, a step of determining a file whose size is less than a first threshold in a user space corresponding to the first app, for example, step S405) originally performed by a backup app are changed to be performed by a kernel process (corresponding to the installd process in the embodiment in FIG. 4A and FIG. 4B). Therefore, a communication process of transferring information between the kernel process and the backup app by using a first brief file and a second brief file is simplified.

In other words, the backup method shown in FIG. 8 may not depend on presence of the first brief file and the second brief file. After step S801 is performed, and the backup app invokes the kernel process, and triggers the kernel process to perform step S802, the kernel process completes a process of determining the file whose size is less than the first threshold in the user space corresponding to the first app. Therefore, there is no need to perform a step in which the kernel process first feeds back the first brief file to the backup app, and then the backup app determines, from the first brief file, the file whose size is less than the first threshold, and then generates the second brief file.

After scanning a file in the user space corresponding to the first app, the kernel process may package and compress the file whose size is less than the first threshold into a first compressed package and store the first compressed package in the user space corresponding to the first app, and then perform step S804 (similar to step S408 in the embodiment in FIG. 4A and FIG. 4B, and details are not described again).

Compared with the embodiment shown in FIG. 4A and FIG. 4B, the embodiment shown in FIG. 8 can reduce communication overheads and information transfer overheads between the kernel process and the backup app in one aspect. However, in another aspect, because the kernel process is usually further used to perform a large quantity of various types of operations, the implementation in FIG. 8 occupies a large quantity of computing resources of the kernel process, which may affect execution of another task of an operating system by the kernel process.

During specific implementation, persons skilled in the art may also configure the terminal 10 to respectively use the implementation shown in FIG. 4A and FIG. 4B and the implementation shown in FIG. 8 in different scenarios. For example, when load of the kernel process is high, the implementation shown in FIG. 4A and FIG. 4B is used; or when load of the kernel process is low and the kernel process is idle, the implementation shown in FIG. 8 is used.

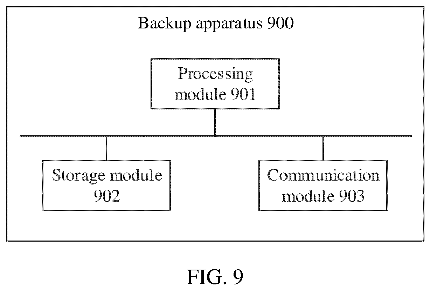

An embodiment of this application further provides a backup apparatus 900. The backup apparatus 900 may be configured to perform any one or more backup methods provided in embodiments of this application. As shown in FIG. 9, the backup apparatus 900 may include a processing module 901 and a storage module 902. Optionally, the backup apparatus 900 may further include a communication module 903. The storage module 902 stores instructions. When the instructions are executed by the processing module 901, the backup apparatus 900 is enabled to perform the any one or more backup methods provided in embodiments of this application.

For example, the processing module 901 may be configured to perform any one or more of step S401 to step S409 and step S801 to step S805. The storage module 902 may be configured to store a file in a user space corresponding to a first app, a file in a user space corresponding to a backup app, a first brief file, a second brief file, and the like. The communication module 903 may be configured to send a first compressed package to a cloud server 20 when the backup apparatus 900 performs step S409 or step S805.

An embodiment of this application further provides a nonvolatile computer-readable storage medium. The computer-readable storage medium stores instructions. When the instructions are executed, an apparatus on which the computer-readable storage medium is installed is enabled to perform any one or more backup methods provided in embodiments of this application.

An embodiment of this application further provides a computer program product. The computer program product includes instructions. When the instructions are executed, an apparatus on which the computer program product is installed is enabled to perform any one or more backup methods provided in embodiments of this application.

An embodiment of this application further provides a communication system. The communication system includes the foregoing backup apparatus 900 and the foregoing cloud server 20. The backup apparatus 900 may be configured to perform any one or more backup methods provided in embodiments of this application. The cloud server 20 may be at least configured to receive and store a first compressed package sent by the backup apparatus 900.

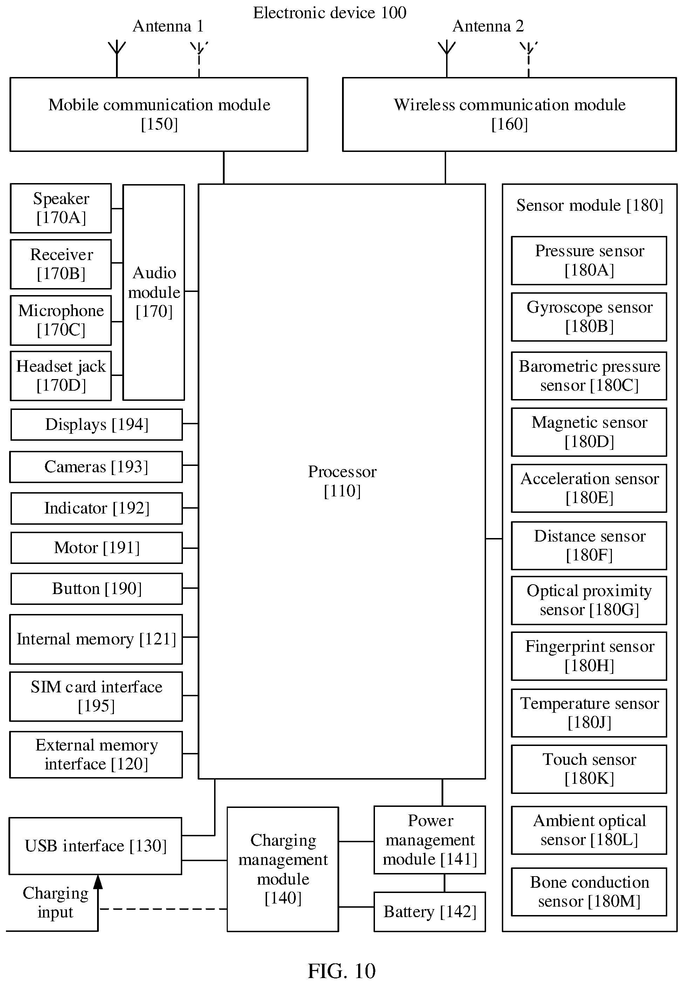

FIG. 10 is a diagram of an example of a structure of an electronic device 100 according to an embodiment of this application. The electronic device 100 may be the terminal 10 in embodiments of this application, or may be the cloud server 20.

The electronic device 100 may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. The smart home device may include but is not limited to the following examples: a smart large screen, a smart television, a smart speaker, a sweeper, a smart light, and a smart toilet. A specific type of the electronic device 100 is not specifically limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a micro-controller unit (micro-controller unit, MCU), a neural-network processing unit (neural-network processing unit, NPU), and/or the like. Different processing units may be independent components, or may be integrated into one or more processors.

The processor 110 may generate an operation control signal based on instruction operation code and a time sequence signal, to complete control on instruction fetching and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module such as a touch sensor, an audio module, a wireless communication module, a display, and a camera through at least one of the foregoing interfaces.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from an interface connection manner in this embodiment, or use a combination of a plurality of interface connection manners.

The USB interface 130 is an interface complying with a USB standard specification, and may be configured to connect the electronic device 100 and a peripheral device, and may be specifically a mini USB interface, a micro USB interface, a USB type-C interface, or the like. The USB interface 130 may be configured to connect to a charger, so that the charger charges the electronic device 100, or may be configured to connect to another electronic device, to implement data transmission between the electronic device 100 and the another electronic device. The USB interface 130 may alternatively be configured to connect to a headset, to output, through the headset, an audio stored in the electronic device. The interface may be further configured to connect to another electronic device, for example, a VR device. In some embodiments, standard specifications of the universal serial bus may be USB1.x, USB2.0, USB3.x, and USB4.

The charging management module 140 is configured to receive a charging input of the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. Certainly, the processor may not include a GPU, and a non-GPU processing unit is used to implement the foregoing functions.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or more displays 194.

The electronic device 100 may implement an image shooting function via the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a photosensitive element of a camera of the color camera module may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format.

In some embodiments, the 3D sensing module may be a (time of flight, TOF) 3D sensing module or a structured light (structured light) 3D sensing module. Structured light 3D sensing is an active depth sensing technology, and basic components of the structured light 3D sensing module may include an infrared (Infrared) transmitter, an IR camera module, and the like. A working principle of the structured light 3D sensing module is to first transmit a light spot of a specific pattern (pattern) to a photographed object, and then receive coding (light coding) of the light spot of the pattern on a surface of the object, to compare the light spot with an original projected light spot in terms of a similarity and a difference, and calculate three-dimensional coordinates of the object according to a trigonometric principle. The three-dimensional coordinates include a distance between the electronic device 100 and the photographed object. TOF 3D sensing may be an active depth sensing technology. Basic components of the TOF 3D sensing module may include an infrared (Infrared) transmitter, an IR camera module, and the like. A working principle of the TOF 3D sensing module is to calculate a distance (that is, a depth) between the TOF 3D sensing module and a photographed object by using infrared refraction time, to obtain a 3D depth-of-field image.

The structured light 3D sensing module may be further applied to fields such as facial recognition, somatic game consoles, and industrial machine vision detection. The TOF 3D sensing module may be further applied to fields such as game consoles and augmented reality (augmented reality, AR)/virtual reality (virtual reality, VR).

In some other embodiments, the camera module 193 may further include two or more cameras. The two or more cameras may include a color camera, and the color camera may be configured to collect color image data of a photographed object. The two or more cameras may collect depth data of the photographed object by using a stereo vision (stereo vision) technology. The stereo vision technology is based on a principle of a parallax of human eyes. Under a natural light source, two or more cameras are used to photograph an image of a same object from different angles, and then an operation such as a triangulation method is performed to obtain distance information, that is, depth information, between the electronic device 100 and the photographed object.

In some embodiments, the electronic device 100 may include one or more camera modules 193. Specifically, the electronic device 100 may include one front-facing camera module 193 and one rear-facing camera module 193. The front-facing camera module 193 may be usually configured to collect color image data and depth data of a photographer facing the display 194, and the rear-facing camera module may be configured to collect color image data and depth data of a photographed object (such as a character or a scenery) faced by the photographer.

In some embodiments, the CPU, the GPU, or the NPU in the processor 110 may process color image data and depth data that are collected by the camera module 193. In some embodiments, the NPU may identify, by using a neural network algorithm on which a skeleton point identification technology is based, for example, a convolutional neural network (CNN) algorithm, color image data collected by the camera module 193 (specifically, the color camera module), to determine a skeleton point of the photographed character. The CPU or the GPU may alternatively run a neural network algorithm to determine the skeleton point of the photographed character based on the color image data. In some embodiments, the CPU, the GPU, or the NPU may be further configured to determine a figure (for example, a body proportion and a fatness and thinness degree of a body part between skeleton points) of the photographed character based on depth data collected by the camera module 193 (which may be the 3D sensing module) and the identified skeleton point, further determine a body beautification parameter for the photographed character, and finally process a photographed image of the photographed character based on the body beautification parameter, so that a body shape of the photographed character in the photographed image is beautified. In a subsequent embodiment, how to perform body shaping processing on an image of a photographed character based on color image data and depth data that are collected by the camera module 193 is described in detail. Details are not described herein.

The digital signal processor is configured to process a digital signal, and may further process another digital signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computation processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card. Alternatively, files such as music and a video are transmitted from the electronic device to the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or output an audio signal of a hands-free call through the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 may include a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

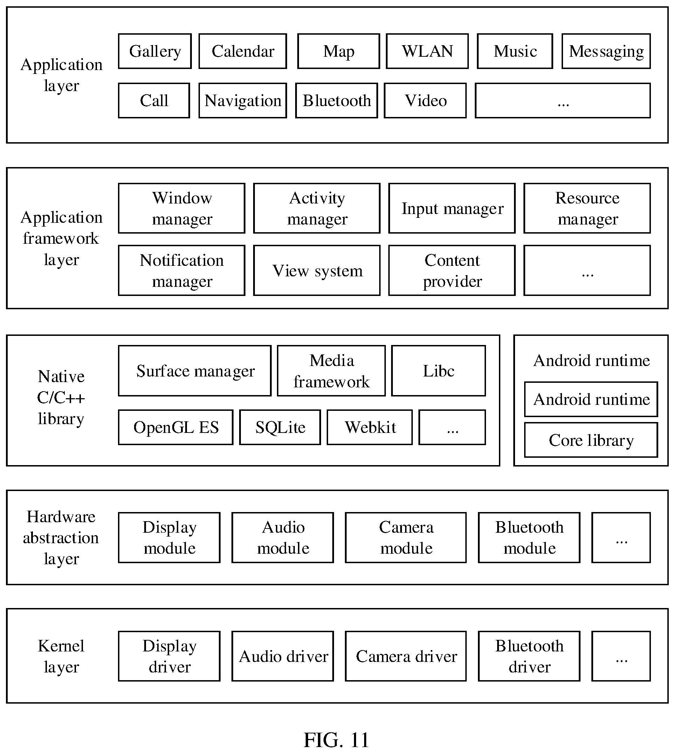

FIG. 11 is a block diagram of an example of a software structure of an electronic device 100 according to an embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 11, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 11, the application framework layer may include a window manager, a content provider, a view system, a resource manager, a notification manager, an activity manager, an input manager, and the like.

The window manager provides a window manager service (Window Manager Service, WMS), and the WMS may be used for window management, window animation management, and surface management, and serve as a transit point for an input system.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, an electronic device vibrates, or an indicator blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager may provide an input manager service (Input Manager Service, IMS), and the IMS may be used for system input management, for example, a touchscreen input, a key input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for a user to develop an Android application.

A native C/C++ library may include a plurality of functional modules, such as a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media framework supports playback and recording of audios and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 100.

The hardware abstraction layer runs in a user space (user space), encapsulates a kernel layer driver, and provides an interface for an upper layer to invoke.

The kernel layer is a layer between hardware and software. The kernel layer includes at least a display driver, a camera driver, an audio driver, and a sensor driver. In embodiments of this application, the "kernel process", the "installd process", and the like may be located at the kernel layer.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A backup method, applied to a terminal, wherein the method comprises:
determining a first application that needs data backup;
packaging and compressing a file whose size is less than a first threshold in a user space corresponding to the first application, to obtain a first compressed package, wherein the first compressed package is stored in the user space corresponding to the first application; and
backing up the first compressed package from the user space corresponding to the first application to a user space corresponding to a second application.

2. The method according to claim 1, wherein before the packaging and compressing the file whose size is less than the first threshold in the user space corresponding to the first application, the method further comprises:
scanning a file in the user space corresponding to the first application.

3. The method according to claim 1 or 2, wherein the method further comprises:
generating a first brief file, wherein the first brief file is used to record information about a file that needs to be backed up in the user space corresponding to the first application.

4. The method according to claim 3, wherein the file that needs to be backed up in the user space corresponding to the first application comprises: a file whose hash value changes in the user space corresponding to the first application, and/or a file newly added in the user space corresponding to the first application.

5. The method according to claim 3, wherein the information about the file that needs to be backed up in the user space corresponding to the first application comprises: a file name and a size of the file that needs to be backed up in the user space corresponding to the first application.

6. The method according to any one of claims 3 to 5, wherein the method further comprises:
generating a second brief file based on the first brief file, wherein the second brief file is used to record information about a file whose size is less than the first threshold in the file recorded in the first brief file.

7. The method according to claim 6, wherein the packaging and compressing the file whose size is less than the first threshold in the user space corresponding to the first application, to obtain the first compressed package specifically comprises:
packaging and compressing, based on the second brief file, the file that is recorded in the second brief file in the user space corresponding to the first application, to obtain the first compressed package.

8. The method according to any one of claims 1 to 7, wherein after the backing up the first compressed package from the user space corresponding to the first application to the user space corresponding to the second application, the method further comprises:
deleting the first compressed package in the user space corresponding to the first application.

9. The method according to any one of claims 1 to 8, wherein the method further comprises:
sending the first compressed package in the user space corresponding to the second application to a cloud server.

10. The method according to any one of claims 1 to 9, wherein the method further comprises:
deleting the first compressed package in the user space corresponding to the second application.

11. The method according to claim 9, wherein in the process of sending the first compressed package in the user space corresponding to the second application to the cloud server, the method further comprises:
displaying a first interface of the second application, wherein the first interface comprises prompt information used to prompt that data is being synchronized to the cloud server.

12. The method according to any one of claims 1 to 11, wherein the step of packaging and compressing the file whose size is less than the first threshold in the user space corresponding to the first application, to obtain the first compressed package and the step of backing up the first compressed package from the user space corresponding to the first application to the user space corresponding to the second application are performed by a kernel process.

13. The method according to any one of claims 1 to 12, wherein the method further comprises:
displaying a second interface of the second application, wherein the second interface comprises a start backup control, and
in response to an operation performed on the start backup control, performing, by the terminal, the step of packaging and compressing a file whose size is less than a first threshold in user space corresponding to the first application, to obtain a first compressed package.

14. The method according to any one of claims 1 to 13, wherein in the process of packaging and compressing the file whose size is less than the first threshold in the user space corresponding to the first application, to obtain the first compressed package, the method further comprises:
displaying a third interface of the second application, wherein the third interface comprises prompt information used to prompt that data is being prepared, and/or prompt information used to prompt a user not to use the first application.

15. The method according to any one of claims 1 to 14, wherein the method further comprises:
sequentially backing up, to the user space corresponding to the second application, files whose sizes are greater than or equal to the first threshold in the user space corresponding to the first application.

16. An electronic device, wherein the electronic device comprises a processor and a memory, the memory stores instructions, and when the instructions are executed by the processor, the electronic device is enabled to perform the method according to any one of claims 1 to 15.

17. A computer-readable storage medium, wherein the computer-readable storage medium stores instructions, and when the instructions are executed, an electronic device on which the computer-readable storage medium is installed is enabled to perform the method according to any one of claims 1 to 15.

18. A computer program product, wherein the computer program product comprises instructions, and when the instructions are executed, an electronic device on which the computer program product is installed is enabled to perform the method according to any one of claims 1 to 15.
